# EUROPÄISCHE PATENTSCHRIFT

(11) **EP 0 438 553 B1**
(45) Veröffentlichungstag und Bekanntmachung des Hinweises auf die Patenterteilung: **12.01.1994**
(21) Anmeldenummer: 90910643.7
(22) Anmeldetag: 13.07.1990
(51) Int. Cl.: B60T 8/36, B60T 13/68, H01F 5/04

(54) **VENTILBLOCK, INSBESONDERE FÜR SCHLUPFGEREGELTE, HYDRAULISCHE BREMSANLAGEN**
VALVE BLOCK, IN PARTICULAR FOR SLIP-CONTROLLED HYDRAULIC BRAKE SYSTEMS
APPAREILS GROUPES DE DISTRIBUTION ET DE REGULATION, NOTAMMENT POUR SYSTEMES HYDRAULIQUES DE FREINAGE A ANTI-DERAPEUR AUTOMATIQUE

(30) Priorität: 10.08.1989 DE 3926454
(43) Veröffentlichungstag der Anmeldung: 31.07.1991
(73) Patentinhaber: ITT Automotive Europe GmbH, 60488 Frankfurt (DE)
(72) Erfinder: VOLZ, Peter, D-6100 Darmstadt (DE)
(86) Internationale Anmeldenummer: EP9001149
(87) Internationale Veröffentlichungsnummer: WO9101907

(56) Entgegenhaltungen:
- CH-A- 0 238 395
- DE-A- 3 701 019
- FR-A- 2 449 996
- US-A- 3 403 884
- PATENT ABSTRACTS OF JAPAN volume 12, No.304 (E-646)(3151) 18 August 1988
- PATENT ABSTRACTS OF JAPAN volume 12, No.261 (E-636)(3108) 22 July 1988

## Beschreibung

### Ventilblock, insbesondere für schlupfgeregelte, hydraulische Bremsanlagen

Die Erfindung betrifft einen Ventilblock, insbesondere für schlupfgeregelte hydraulische Bremsanlagen nach dem Oberbegriff des Anspruchs 1.

Ein derartiger Ventilblock ist aus der Patentanmeldung P 37 01 019.0 bekannt. Das Außengehäuse des Ventilblockes ist bei dieser Anordnung auf dem Ventilblockgehäuse verrastet, wobei die elektrischen Leiter mit den Magnetspulen verlötet sind und mit einem als Messerleiste ausgebildeten Kontaktkörper im Gehäusedeckel zum Anschluß an eine Steuereinheit geführt sind. Die Erfordernis eines separaten Gehäusedeckels und das Verlöten der Spulen und Leiterbahnen sind nicht als vorteilhaft anzusehen, da der verhältnismäßig große Aufwand zum Verlöten der Leiterbahn mit den Spulen sich auf die Herstellungskosten ungünstig auswirkt. Ebenso wird die aufwendige Montage der vielen Bauteile, die Korrosionsgefahr bei unzureichender Stecker- und Deckelabdichtung sowie die unzureichende Wärmeabfuhr über den Gehäusedeckel und die daraus resultierende Wärmedehnung bei dem bekannten konventionellen Ventilblockaufbau als nachteilig empfunden.

Ferner zeigt die Druckschrift US-A-3,403,884 ein blockähnliches Ventilgehäuse zur Aufnahme von wenigstens einer einen Ventildom aufweisenden Magnetspule, wobei die mit Isolierstoff umgossene Magnetspule mit mehreren elektrischen Leitern versehen ist, die in einem Kontaktträger eingebettet sind und wobei der die Magnetspule umgebende Isolierstoff mit dem Kontaktträger eine integrierte Einheit bildet. Bei Temperaturänderungen, die einerseits auf den wechselnden Einschaltzeiten des Ventils, andererseits auch auf Änderungen der Umgebungstemperatur beruhen, entstehen Wärmedehnungen, die in Abhängigkeit von der gewählten Passungstoleranz sich auf die Funktionsfähigkeit des Ventils nachteilig auswirken können, insbesondere dann, wenn hierdurch mechanische Spannungen zwischen dem die elektrische Leiter aufnehmenden Kontaktträger und dem die Magnetspule umgebenden Isolierstoff auftreten.

In den PATENT ABSTRACTS JP-A-63073504 und JP-A-63046702 werden Magnetspulen gezeigt, die zum Zwecke einer genügend hohen mechanischen Festigkeit der einzelnen Komponenten, wie der die Magnetspule mit dem die elektrischen Leiter aufnehmenden Fortsatz, in einer mechanisch verstärkten und damit steifen Platte integriert sind. Eine elastische Verbindung des Kontaktträgers mit dem Isolierstoff der Magnetspule zum Zwecke des thermodynamischen Spannungsausgleichs ist hierdurch nicht vorgesehen.

Es ist daher die Aufgabe der vorliegenden Erfindung, einen Ventilblock der eingangs genannten Gattung dahingehend zu verbessern, daß unter Umgehung der zuvor genannten Nachteile eine erhöhte Funktionssicherheit, eine wesentliche Vereinfachung der Verbindungstechnik bei gleichzeitiger Berücksichtigung des modularen Aufbaus und eine Verbesserung der Reparaturfreundlichkeit erreicht wird.

Die Aufgabe wird erfindungsgemäß durch die den Patentanspruch 1 kennzeichnenden Merkmale gelöst.

Die Ausgestaltung des Erfindungsgegenstandes läßt es zu, die Stromleiter an den Magnetspulen unabhängig von ihrer Ausführung, ob Kabel, Stanzgitter oder Draht, beliebig zum Ventilblockgehäuse zu positionieren und anschließend mit dem Kontaktträger korrosionsgeschützt sowie zugentlastend zu umspritzen.

Ferner ist beim Erfindungsgegenstand vorgesehen, die Isolierfüllung der Magnetspule im Joch mit der Herstellung des Kontaktträgers zu kombinieren, indem der Kontaktträger aus dem gleichen Isoliermaterial in einem Arbeitsgang im Kunststoffspritzgußverfahren angeformt ist.

Eine vorteilhafte Ausgestaltung der Erfindung besteht darin, die durch elastische Verbindungen auszugleichenden passungs- und temperaturabhängige Änderungen zwischen Magnetspule und Kontaktträger vorzugsweise kleinflächig über membranzungenartige oder spinnenförmige Vernetzungen mittels einer Zugentlastung der in den elastischen Verbindungen eingebetteten Stromleiter zu ermöglichenen.

Weitere Merkmale, Vorteile und Anwendungsmöglichkeiten der Erfindung gehen aus der Beschreibung mehrerer skizzierter Ausführungsbeispiele hervor, die nachfolgend näher dargestellt werden.

Es zeigt:
- Fig. 1: einen Teilschnitt des erfindungsgemäßen Ventilblockes.
- Fig. 2: die Draufsicht auf den Ventilblock mit einer Darstellung von drei Ausführungen der Anbindung zwischen Kontaktträger und Magnetspule.
- Fig. 3: eine alternative Darstellungsform in der Seitenansicht des Ventilblockes mit der erfindungsgemäßen membranartigen Anbindung zwischen Kontaktträger und Magnetspule.
- Fig. 4: eine räumliche Darstellung der spinnen- bzw. S-förmigen elastischen Anbindung des Kontaktträgers zur Magnetspule.

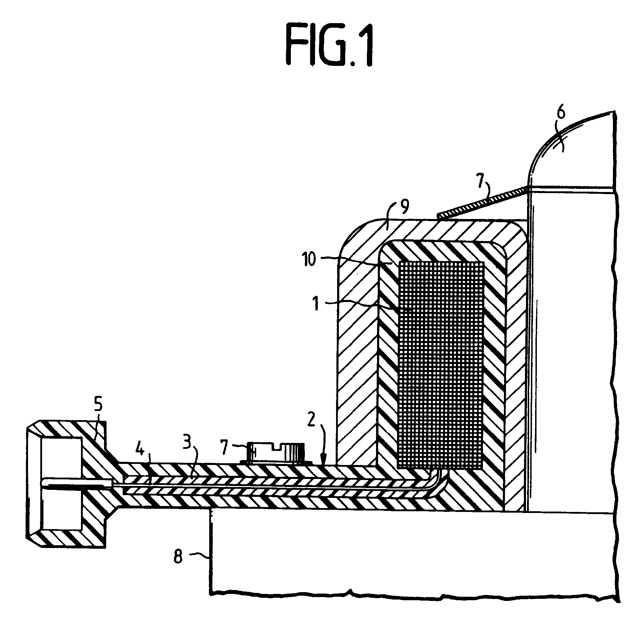

Fig. 1 zeigt einen Abschnitt des Ventilblockes mit einer im Schnitt teilweise dargestellten Magnetspule 1, die im Joch 9 vom Isolierstoff (10) umspritzt ist, wobei der als Stromleiter 4 ausgebildete Magnetspulendraht aus dem Joch 9 in direkter Anbindung ausgeführt ist und vorzugsweise in einem Arbeitsgang durch Umspritzen mit dem Isolierstoff 10 zum Kontaktträger 2 ausgeformt ist. Zur Befestigung des Kontaktträgers 2 am Ventilblockgehäuse 8 ist vorzugsweise ein als Schraube ausgebildetes Halteelement 7 vorgesehen. Ebenso ist es denkbar, die Befestigung des Kontaktträgers 2 durch ein am Ventildom 6 aufgeschrumpftes, als Tellerfeder wirkendes Halteelement 7 durchzuführen. Beide Variationen sind in der Abbildung dargestellt.

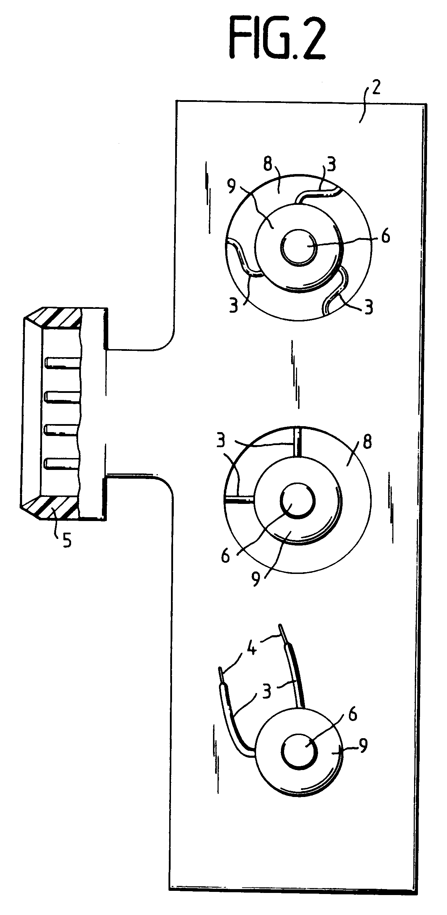

Fig. 2 zeigt die Draufsicht auf das Ventilblockgehäuse 8 mit den auf den Ventildom 6 aufgeschobenen Magnetspulen 1, wobei alternativ drei verschiedene Ausführungsformen der elastischen Verbindung 3 zur radialen Anbindung der Stromleiter 4 zwischen den Magnetspulen 1 und dem Kontaktträger 2 und letztlich auch zu dem Steckeranschluß 5 hergestellt sind.

Die erste Ausführungsform in Figur 2 zeigt drei über den Umfang der Magnetspule 1 gleichmäßig verteilte elektrische Stromleiter 4, die zur ungehinderten elastischen Verformbarkeit in radialer Ausdehnung zur Magnetspule 1 S-förmig verwunden sind, so daß bei unterschiedlicher mechanischer sowie thermischer Beanspruchung eine ungehinderte Längung oder Verkürzung der elastischen Verbindungen 3 erfolgen kann. Die Stromleiter 4 sind mit dem Kunststoffisolierstoff 10 der Magnetspulen 1 bzw. des Kontaktträgers 2 umspritzt.

Die zweite beispielhaft in Figur 2 gezeigte elastische Verbindung 3 des Stromleiters 4 zwischen Magnetspule 1 und Kontaktträger 2 erfolgt über separat isolierte sowie unverwundene Zuleitungen, wodurch eine sichere Befestigung des Kontaktträgers 2 auf dem Ventilblockgehäuse 8 über zusätzliche Halteelemente 7 erfolgen muß.

Alternativ zeigt die dritte Ausführungsform der Figur 2 die Magnetspule 1 und die Kabelverbindung des Stromleiters 4 in beliebiger Anordnung umspritzt vom Material des Kontaktträgers 2, so daß sich eine gesonderte Fixierung des Kontaktträgers 2 gegenüber der Magnetspule auf dem Ventilblockgehäuse 8 erübrigt. Der Kontaktträger 2 ist in der Abbildung an der linken Seite als Steckeranschluß 5 ausgeformt, wobei die aus dem Steckeranschluß 5 herausstehenden Anschlüsse des Stromleiters 4 erkennbar sind.

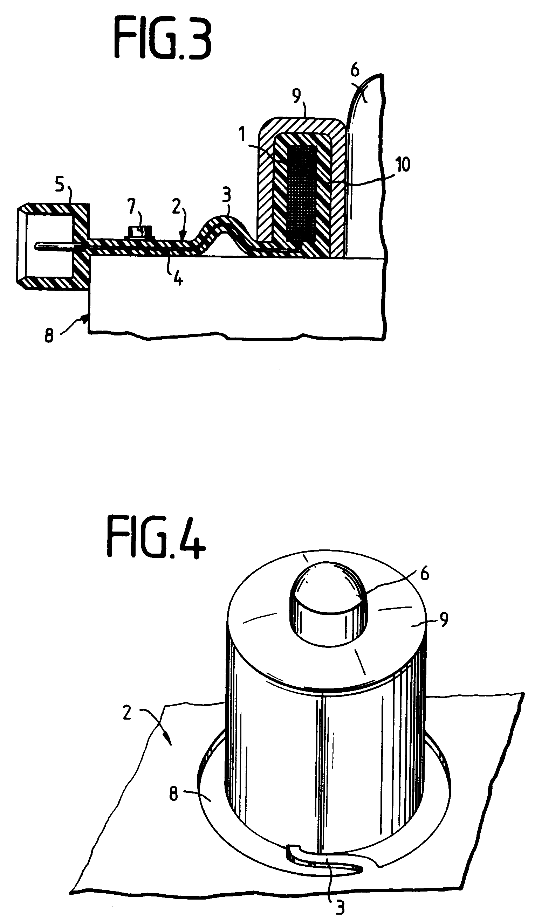

Fig. 3 skizziert unter Bezugnahme auf Figur 1 eine Möglichkeit zur Ausführung der elastischen Verbindung 3 in Form einer in der Seitenansicht dargestellten membranartig verwundenen Kontaktierung der Magnetspule 1, so daß bei mechanischer oder thermischer Beanspruchung des Ventilblockes ein Dehnungsausgleich und folglich eine Zugentlastung des im Kontaktträger 2 eingebetteten Stromleiters 4 gewährleistet ist.

Fig. 4 zeigt in einer räumlichen Darstellung die spinnen- bzw. S-förmige elastische Verbindung 3 des Stromleiters 4 zwischen Magnetspule 1 und Kontaktträger 2, so daß bei Längenänderung der Bauteile ein ungehinderter seitlicher Längenausgleich der elastischen Anbindung ermöglicht ist.

### Bezugszeichenliste

- 1: Magnetspulen
- 2: Kontaktträger
- 3: elastische Verbindung
- 4: Stromleiter
- 5: Steckeranschluß
- 6: Ventildom
- 7: Halteelemente
- 8: Ventilblockgehäuse
- 9: Joch

## Patentansprüche

1. Ventilblock, insbesondere für schlupfgeregelte, hydraulische Bremsanlagen, mit mehreren Magnetspulen (1) aufnehmenden Ventildomen (6) und mit um die Magnetspulen (1) vergossenem Isolierstoff (10) sowie mit einem mehrere elektrische Leiter enthaltenden Kontaktträger (2), wobei der die Magnetspulen (1) umgebende Isolierstoff (10) mit dem Kontaktträger (2) eine integrale Einheit bildet, dadurch **gekennzeichnet,** daß der Kontaktträger (2) über mindestens eine elastische Verbindung (3) mit dem Isolierstoff (10) der Magnetspulen (1) verbunden ist, so daß eine von Passungstoleranzen und von Temperaturänderungen unabhängige Kontaktierung besteht, und daß die Magnetspulen (1) sowie die Ventildome (6) von dem Kontaktträger (2) allseitig umhüllend begrenzt sind, wobei der Kontaktträger (2) am Ventilblockgehäuse (8) mit mindestens einem Halteelement (7) befestigt ist.

2. Ventilblock nach Anspruch 1, dadurch **gekennzeichnet,** daß die elastische Verbindung (3) zwischen den Magnetspulen (1) und dem Kontaktträger (2) ein homogener Bestandteil des die Magnetspulen (1) umschließenden Isolierstoffes (10) ist.

3. Ventilblock nach den Ansprüchen 1 oder 2, dadurch **gekennzeichnet,** daß die elastische Verbindung (3) die elektrischen Stromleiter (4) zwischen den Magnetspulen (1) und einem mit einer Steuerelektronik in Verbindung stehenden Steckeranschluß (5) aufnimmt.

4. Ventilblock nach einem der vorhergehenden Ansprüche, dadurch **gekennzeichnet,** daß die Stromleiter (4) ein durch Umspritzen gebildetes, elektrisch isoliertes sowie integriertes Teil im Kontaktträger (2) darstellen.

5. Ventilblock nach einem der vorhergehenden Ansprüche, dadurch **gekennzeichnet,** daß die Stromleiter (4) aus lackisolierten Drähten bestehen und in einer oder mehreren Ebenen im Kontaktträger (2) positionierbar sind.

6. Ventilblock nach mindestens einem der vorhergehenden Ansprüche 1 bis 5, dadurch **gekennzeichnet,**daß die Stromleiter (4) als Stanzgitter in mindestens einer Ebene des Kontaktträgers (2) eingebettet sind.

7. Ventilblock nach einem der vorhergehenden Ansprüche, dadurch **gekennzeichnet,** daß der Kontaktträger (2) in axialer Richtung zur Ventildomachse in beliebiger Lage zu den auf den Ventildomen (6) fixierten Magnetspulen (1) positionierbar ist.

8. Ventilblock nach einem der vorhergehenden Ansprüche, dadurch **gekennzeichnet,** daß der Kontaktträger (2) mittels kraftschlüssiger und/oder formschlüssiger Halteelemente (7), durch Verwendung von Klemmelementen am Ventilblockgehäuse (8) gehalten ist.

9. Ventilblock nach einem der vorhergehenden Ansprüche, dadurch **gekennzeichnet,** daß die Isolierfüllung im Joch (9) der Magnetspulen (1) und das Formmaterial des Kontaktträgers (2) identisch sind, so daß in einem Arbeitsgang im Kunststoffspritzgußverfahren eine homogene Einheit herstellbar ist.

10. Ventilblock nach Anspruch 1, dadurch **gekennzeichnet,** daß jeweils die Anbindung des Stromleiters (4) an der Magnetspule (1) in radialer Erstreckung über membranzungenartige oder spinnenförmige elastische Verbindungen (3) erfolgt, so daß bei Längenänderung der Teile eine längenausgleichende und somit spannungsfreie Zugentlastung des Stromleiters (4) gewährleistet ist.

## Claims

1. A valve block, in particular for slip-controlled hydraulic brake systems, comprised of a plurality of valve domes (6) incorporating magnet coils (1) and with insulating material (10) cast around the magnet coils (1), as well as comprised of a contact carrier (2) containing a plurality of electric conductors, the insulating material (10) encompassing the magnet coils (1) forming an integral unit with the contact carrier (2),
**characterised** in that the contact carrier (2) is connected with the insulating material (10) of the magnet coils (1) by way of at least one elastic linkage (3) so that contacting is made which is independent of fit tolerances and temperature variations, and in that the magnet coils (1) as well as the valve domes (6) are encompassed and confined on all sides by the contact carrier (2), the said contact carrier (2) being attached to the valve block housing (8) by at least one retaining element (7).

2. A valve block as claimed in claim 1,
**characterised** in that the elastic linkage (3) between the magnet coils (1) and the contact carrier (2) is a homogeneous constituent of the insulating material (10) encompassing the magnet coils (1).

3. A valve block as claimed in claims 1 or 2,
**characterised** in that the elastic linkage (3) accommodates the electric current conductors (4) between the magnet coils (1) and a plug connection (5) that is in connection with a control electronics.

4. A valve block as claimed in any one of the preceding claims,
**characterised** in that the current conductors (4) represent a component part in the contact carrier (2) which is formed by extrusion-coating, which is electrically insulated and integrated.

5. A valve block as claimed in any one of the preceding claims,
**characterised** in that the current conductors (4) are composed of varnish-insulated wires and can be positioned in one or more planes in the contact carrier (2).

6. A valve block as claimed in at least one of the preceding claims 1 to 5,
**characterised** in that the current conductors (4) are embedded as a punched grid in at least one plane of the contact carrier (2).

7. A valve block as claimed in any one of the preceding claims,
**characterised** in that the contact carrier (2) can be positioned in axial direction relative to the valve domes' axis in any location desired in respect of the magnet coils (1) fixed on the valve domes (6).

8. A valve block as claimed in any one of the preceding claims,
**characterised** in that the contact carrier (2) is retained on the valve block housing (8) by means of operatively connected and/or form-locking retaining elements (7), in particular by using clamping elements.

9. A valve block as claimed in any one of the preceding claims,
**characterised** in that the insulating stuffing in the yoke (9) of the magnet coils (1) and the mould material of the contact carrier (2) are identical so that a homogeneous unit can be made in one working operation by plastic injection moulding.

10. A valve block as claimed in claim 1,
**characterised** in that in each case the connection of the current conductor (4) to the magnet coil (1) is effected in radial extension by means of resilient-tab-like or spider-type elastic linkages (3) so that, in the event of length variation of the component parts, strain relief of the current conductor (4) is ensured which provides for length compensation and thus a non-tension condition.

## Revendications

1. Bloc de valves, notamment pour systèmes hydrauliques de freinage à régulation du glissement, comprenant plusieurs dômes de valves (6), servant à loger des bobines d'électro-aimant (1), une matière isolante (10), coulée autour des bobines d'électro-aimant (1), et un porte-contacts (2) contenant plusieurs conducteurs électriques, la matière isolante (10) qui entoure les bobines d'électro-aimant (1) constituant un bloc unitaire avec le porte-contacts (2), caractérisé en ce que le porte-contacts (2) est relié à la matière isolante (10) des bobines d'électro-aimant (1) par au moins une liaison élastique (3), de sorte qu'il existe une jonction de contact indépendante des tolérances d'ajustement et des variations de température, et en ce que les bobines d'électro-aimant (1) et les dômes de valves (6) sont délimités de tous côtés d'une manière enveloppante par le porte-contacts (2), le porte-contacts (2) étant fixé sur le boîtier (8) du bloc de valves par au moins un élément de maintien (7).

2. Bloc de valves suivant la revendication 1, caractérisé en ce que la liaison élastique (3) entre les bobines d'électro-aimant (1) et le porte-contacts (2) forme une partie constitutive homogène de la matière isolante (10) entourant les bobines d'électro-aimant (1).

3. Bloc de valves suivant l'une des revendications 1 et 2, caractérisé en ce que la liaison élastique (3) sert à loger les conducteurs de courant électrique (4) entre les bobines d'électro-aimant (1) et une prise de raccord (5) pouvant être reliée à un circuit électronique de commande.

4. Bloc de valves suivant l'une des revendications précédentes, caractérisé en ce que les conducteurs de courant (4) constituent une partie, formée par un enveloppement par injection et isolée électriquement, qui est située dans le porte-contacts (2), de façon à former un bloc unitaire.

5. Bloc de valves suivant l'une des revendications précédentes, caractérisé en ce que les conducteurs de courant (4) sont formés de fils métalliques à vernis isolant et sont agencés de façon à pouvoir être positionnés dans un ou plusieurs plans dans le porte-contacts (2).

6. Bloc de valves suivant au moins l'une des revendications précédentes 1 à 5, caractérisé en ce que les conducteurs de courant (4) sont noyés, sous la forme d'une grille découpée à l'emporte-pièce, dans au moins un plan du porte-contacts (2).

7. Bloc de valves suivant l'une des revendications précédentes, caractérisé en ce que le porte-contacts (2) est agencé de façon à pouvoir être positionné en direction axiale vers l'axe du dôme de valve dans une position choisie vis-à-vis des bobines d'électro-aimant (1) fixées sur les dômes de valves (6).

8. Bloc de valves suivant l'une des revendications précédentes, caractérisé en ce que le porte-contacts (2) est maintenu sur le boîtier (8) du bloc de valves, en utilisant des éléments de serrage, au moyen d'éléments de maintien (7) agissant par application d'une force et/ou par complémentarité de formes.

9. Bloc de valves suivant l'une des revendications précédentes, caractérisé en ce que le remplissage isolant dans la culasse (9) des bobines d'électro-aimant (1) et la matière de formage du porte-contacts (2) sont identiques, de sorte qu'une unité homogène peut être réalisée en une opération du procédé de moulage de matière plastique par injection.

10. Bloc de valves suivant la revendication 1, caractérisé en ce que la jonction du conducteur de courant (4) à la bobine d'électro-aimant (1) se réalise chaque fois suivant une orientation radiale au moyen de liaisons élastiques (3) en forme de pattes de membrane ou en forme de croisillon, ce qui assure une détente de traction du conducteur de courant (4) qui permet une compensation de longueur et est donc exempte de contrainte, lors d'une variation de longueur des pièces.
